# EUROPÄISCHE PATENTANMELDUNG

(11) **EP 1 932 610 A1**
(43) Veröffentlichungstag der Anmeldung: **18.06.2008**
(21) Anmeldenummer: 07023519.7
(22) Anmeldetag: 05.12.2007
(51) Int. Cl.: B23F 1/02, B24B 19/00

(54) **Verfahren zum Schleifen eines Werkstücks und Schleifmaschine**

(30) Priorität: 12.12.2006 DE 102006058496
(71) Anmelder: NILES Werkzeugmaschinen GmbH, 12681 Berlin (DE)
(72) Erfinder: Reichel, Frank, Dr., 13053 Berlin (DE); Maschirow, Boris, 13125 Berlin (DE)
(74) Vertreter: Gosdin, Michael

(57) **Zusammenfassung**

Die Erfindung betrifft ein Verfahren zum Schleifen eines Werkstücks (1) mit einer geraden oder schrägen Außen- oder Innenverzahnung (2), wobei die Verzahnung (2) mit einer Profilschleifscheibe (3) im diskontinuierlichen Formschleifverfahren feinbearbeitet wird, bei dem die einzelnen Zahnlücken der Verzahnung (2) sequentiell durch Drehen des Werkstücks (1) um seine Drehachse (4) bearbeitet werden. Um eine wirtschaftlichere Bearbeitung des Werkstücks zu erreichen, sieht die Erfindung vor, dass gleichzeitig mit dem Verzahnungsschleifvorgang eine weitere, von der Verzahnung (2) unterschiedliche Oberfläche (5, 6) des Werkstücks (1) mittels einer zweiten Schleifscheibe (7) einer Schruppschleifbearbeitung unterzogen wird, wobei im Anschluss an die Durchführung des Verzahnungsschleifvorgangs die weitere Oberfläche (5, 6) des Werkstücks (1) einer Fertigschleifbearbeitung unterzogen wird. Des weiteren betrifft die Erfindung eine Schleifmaschine zur Durchführung des Verfahrens.

## Beschreibung

Die Erfindung betrifft ein Verfahren zum Schleifen eines Werkstücks mit einer geraden oder schrägen Außen- oder Innenverzahnung, wobei die Verzahnung mit einer Profilschleifscheibe im diskontinuierlichen Formschleifverfahren feinbearbeitet wird, bei dem die einzelnen Zahnlücken der Verzahnung sequentiell durch Drehen des Werkstücks um seine Drehachse bearbeitet werden. Des weiteren betrifft die Erfindung eine Schleifmaschine zur Durchführung des Verfahrens.

Das diskontinuierliche Formschleifverfahren ist bei der Hartfeinbearbeitung insbesondere von Außen- und Innen-Stirnverzahnungen hinlänglich bekannt. Es zeichnet sich dadurch aus, dass - im Unterschied zum Wälzschleifverfahren - die einzelnen Zahnlücken der zu schleifenden Verzahnung sequentiell durch Drehen des Werkstücks um seine Drehachse bearbeitet werden. Die Formschleifscheibe taucht dabei nacheinander in die einzelnen Zahnlücken ein und schleift zwei benachbarte Zahnflanken. Handelt es sich nicht um eine Geradverzahnung, bei der die Schleifscheibe in axiale Richtung durch die Zahnlücke geführt wird, sondern um eine Schrägverzahnung, wird der axialen Vorschubbewegung der Schleifscheibe eine Drehbewegung des Zahnrads überlagert, wobei die Schleifscheibe auf den Schrägungswinkel der Verzahnung eingestellt ist.

Regelmäßig sind an dem zu bearbeitenden Zahnrad weitere Funktionsflächen zu schleifen, insbesondere Bohrungsflächen oder Stirnflächen, d. h. zusätzlich sind Rund- oder Planschleifoperationen erforderlich. Während das Verzahnungsschleifen auf einer entsprechenden Verzahnungsschleifmaschine vorgenommen wird, werden die genannten Bohrungs- bzw. Stirnflächen-Schleifoperationen zumeist auf separaten Rund- bzw. Planschleifmaschinen vorgenommen.

Im Falle des diskontinuierlichen Profilschleifens ist dies im Stand der Technik zwingend, da für die einwandfreie Bohrung- bzw. Stirnflächen-Schleif bearbeitung eine kontinuierliche Drehung des Werkstücks um seine Achse nötig ist, um eine ausreichende Qualität zu erhalten.

Nachteilig ist es dadurch, dass sich ein entsprechender fertigungstechnischer Aufwand ergibt, da das Werkstück von der einen Maschine auf die andere verbracht und ausgerichtet werden muss, um das Verzahnungsschleifen einerseits und das Bohrung- bzw. Stirnflächenschleifen andererseits durchführen zu können.

Der Erfindung liegt die **Aufgabe** zugrunde, ein Schleifverfahren der eingangs genannten Art so weiterzubilden, dass diesbezüglich eine Verbesserung erreicht werden kann. Es soll namentlich möglich werden, eine wirtschaftlichere Herstellungsweise zu erreichen, wenn an einem Werkstück sowohl eine Außen- und/oder Innenverzahnung als auch eine Bohrung bzw. eine Stirnfläche zu schleifen ist. Weiterhin soll eine hierfür geeignete Schleifmaschine bereitgestellt werden.

Die **Lösung** dieser Aufgabe durch die Erfindung ist verfahrensgemäß dadurch gekennzeichnet, dass gleichzeitig mit dem Verzahnungsschleifvorgang eine weitere, von der Verzahnung unterschiedliche Oberfläche des Werkstücks mittels einer zweiten Schleifscheibe einer Schruppschleifbearbeitung unterzogen wird, wobei im Anschluss an die Durchführung des Verzahnungsschleifvorgangs die weitere Oberfläche des Werkstücks einer Fertigschleifbearbeitung unterzogen wird.

Die Fertigschleifbearbeitung kann eine Schlichtschleifbearbeitung sein. Möglich ist es auch, dass es sich hierbei um eine zweite Schruppschleifbearbeitung und eine Schlichtschleifbearbeitung handelt.

Die Erfindung stellt auf die Überlegung ab, dass es für die Erzielung einer hinreichenden Qualität beim Bohrungs- bzw. Stirnflächenplanschleifen nicht möglich ist, eine diskontinuierliche Drehung des Werkstücks während der Schleifoperation hinzunehmen, dass das diskontinuierliche Drehen des Werkstücks beim Verzahnungsschleifen jedoch dazu genutzt werden kann, eine (vorbereitende) Schruppoperation an der Bohrung bzw. an der Stirnfläche vorzunehmen. Diese wird im Ergebnis keine befriedigende Oberfläche an Bohrung bzw. Stirnseite schaffen, was jedoch deshalb unproblematisch ist, weil im Anschluss an das diskontinuierliche Verzahnungsschleifen eine Fertigbearbeitungsoperation (i. d. Regel Schlichtoperation) an Bohrung bzw. Stirnseite vorgenommen wird, die dann in relativ kurzer (Rest-)Zeit die benötigte Qualität der Bohrung bzw. der Stirnseite erzeugt.

Die weitere, von der Verzahnung unterschiedliche Oberfläche des Werkstücks kann eine zylindrische Innenfläche, eine zylindrische Außenfläche, eine kegelige Innenfläche, eine kegelige Außenfläche oder eine ebene Fläche sein. Auch sind beliebige andere Flächen möglich. Bei der ebenen Fläche handelt es sich zumeist um eine stirnseitige Planfläche des Werkstücks.

Sowohl die Schruppschleifbearbeitung als auch die Fertigschleifbearbeitung (zumeist Schlichtschleifbearbeitung) kann dabei mit der zweiten Schleifscheibe durchgeführt werden.

Möglich ist es aber auch, dass die Schruppschleifbearbeitung mit der zweiten Schleifscheibe durchgeführt wird und dass die sich nach dem diskontinuierlichen Schleifen anschließende Fertigschleifbearbeitung (zumeist die Schlichtschleifbearbeitung) mit einer dritten Schleifscheibe durchgeführt wird.

Durch die Schruppschleifbearbeitung wird bevorzugt mindestens 80 % des gesamten abzutragenden Aufmaßes der zu bearbeitenden Oberfläche des Werkstücks (Bohrung oder Stirnseite) abgetragen. Allerdings hängt der Prozentsatz von verschiedenen Parametern ab, z. B. von der Zähnezahl des Werkstücks oder von dem Schleifscheibendurchmesser. Daher sind auch andere Prozentzahlen möglich, z. B. mindestens 66 %, mindestens 70 % oder die bereits genannten mindestens 80 % des gesamten abzutragenden Aufmaßes.

Bei der Durchführung der Fertigschleifbearbeitung rotiert das Werkstück vorzugsweise kontinuierlich um seine Drehachse.

Die erfindungsgemäße Schleifmaschine zum Schleifen eines Werkstücks (mit einer geraden oder schrägen Außen- oder Innenverzahnung) mit einer ersten Schleifspindel zur Aufnahme einer Profilschleifscheibe zeichnet sich erfindungsgemäß dadurch aus, dass die Schleifmaschine weiterhin eine zweite Schleifspindel zur Aufnahme einer Innen- oder Außenrund-Scheifscheibe oder einer Planschleifscheibe aufweist.

Mit dem Erfindungsvorschlag wird es möglich, die ansonsten hinsichtlich der Bearbeitung von Bohrungen und Planflächen nutzlose Bearbeitungszeit während des diskontinuierlichen Verzahnungsschleifens zu nutzen, um die Schruppoperation durchzuführen. Die benötigte Endqualität des Schleifens von Bohrung bzw. Stirnfläche wird im Anschluss daran in kurzer Zeit vorgenommen.

Natürlich können mehrere Schruppoperationen an verschiedenen Funktionsflächen gleichzeitig während des Verzahnungsschleifens durchgeführt werden.

Insgesamt wird es damit möglich, das Verzahnungsschleifen und das Bohrung- bzw. Stirnflächenschleifen insgesamt in deutlich geringerer Zeit durchzuführen, ohne irgendwelche Qualitätseinbußen hinnehmen zu müssen.

In der Zeichnung ist ein Ausführungsbeispiel der Erfindung dargestellt. Es zeigen:
- Fig. 1: die perspektivische Ansicht einer Verzahnungs-Schleifmaschine mit aufgespannten Werkstück und
- Fig. 2: die Draufsicht auf das Werkstück gemäß der Ansicht B nach Fig. 1.

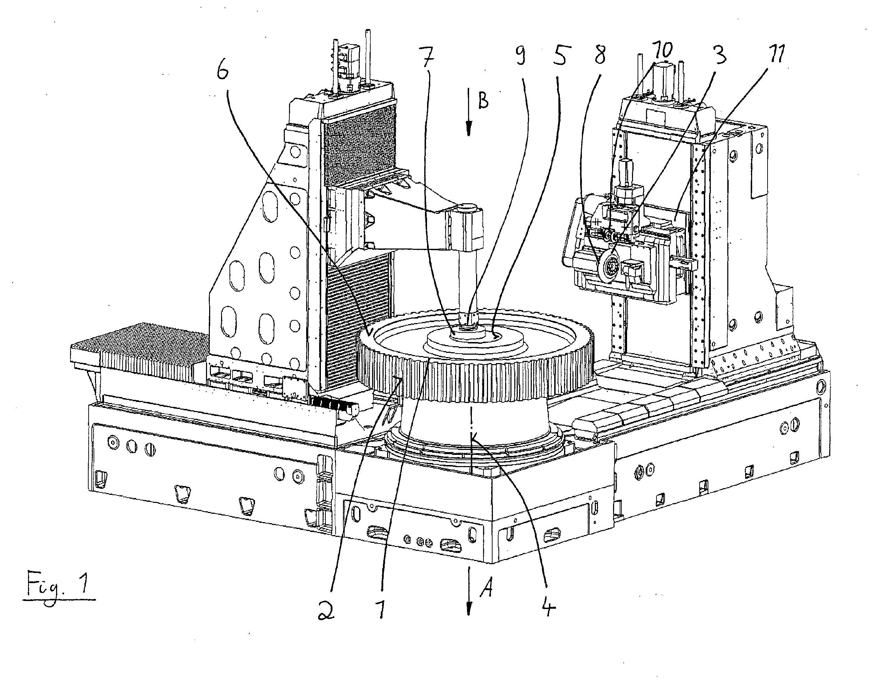

In Fig. 1 ist eine Schleifmaschine dargestellt, auf der ein Werkstück 1 in Form eines großen Zahnrades bearbeitet wird. Das Zahnrad 1 hat eine Verzahnung 2, die vorliegend als gerade Außen-Stirnverzahnung ausgebildet ist. Genauso kommt der Erfindungsvorschlag natürlich auch bei schrägverzahnten Werkstücken zum Einsatz, wobei sowohl Außen- als auch Innenverzahnungen vorgesehen sein können.

Das Zahnrad 2 hat eine Drehachse 4, um die es bei der Bearbeitung auf der Schleifmaschine gedreht werden kann. Dabei wird ein diskontinuierliches Profilschleifen durchgeführt. Hierzu weist die Schleifmaschine eine erste Schleifspindel 8 auf, die eine Profilschleifscheibe 3 in an sich bekannter Weise trägt. Die rotierende Profilschleifscheibe 3 wird dabei sequentiell durch die einzelnen Zahnlücken der Verzahnung 2 geführt und entsprechend auf einem Schlitten 11 in Achsrichtung A bewegt. Im Falle der vorliegenden Geradeverzahnung erfolgt das axiale Verfahren der Profilschleifscheibe 3 durch die Zahnlücke bei stehendem Werkstück 1. Liegt eine Schrägverzahnung vor, wird das Zahnrad 1 gleichzeitig entsprechend der Steigung um die Drehachse 4 gedreht.

Die Profilschleifscheibe 3 kann im Betrieb der Schleifmaschine durch ein Abrichtwerkzeug 10 abgerichtet werden.

Wesentlich ist, dass während der Verzahnungsschleifoperation simultan eine Bearbeitung einer Bohrungsfläche 5 und/oder einer Stirnfläche 6 erfolgt, die sich am Werkstück 1 befinden. Es handelt sich dabei um eine Schruppoperation, die gleichzeitig mit dem Verzahnungsschleifen durchgeführt wird. Hierfür weist die Schleifmaschine eine zweite Schleifscheibe 7 auf, die an einer zweiten Schleifspindel 9 angeordnet ist.

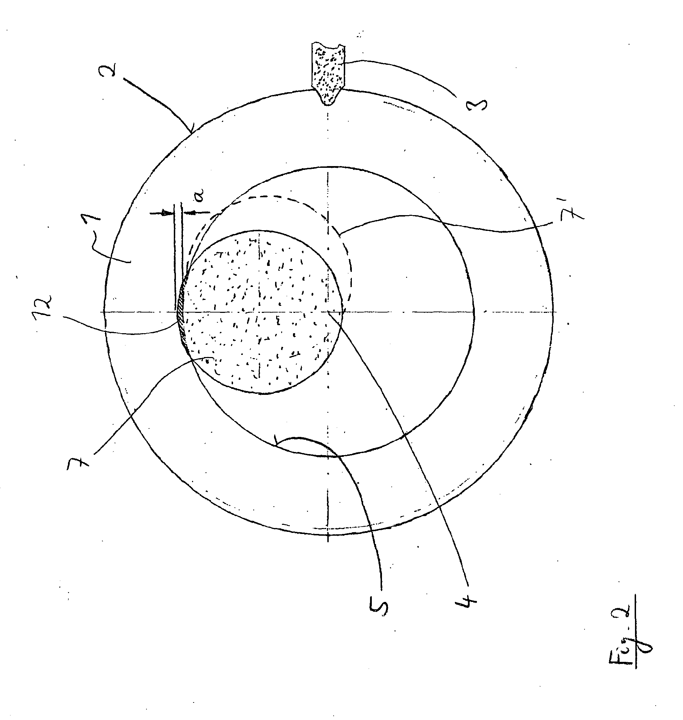

Dieser Prozess ist aus Fig. 2 ersichtlich. Hier ist noch einmal das Zahnrad 1 schematisch dargestellt, das im wesentlichen aus einem hohlzylindrischen Körper besteht, an dessen Außenumfang die Verzahnung 2 angeordnet ist. Dargestellt ist lediglich eine Zahnlücke, in die die Profilschleifscheibe 3 eingreift.

Die Innen-Bohrung 5 soll in einer Aufspannung mit der Verzahnung 2 geschliffen werden. Hierzu ist die zweite Schleifscheibe 7 vorgesehen, die eine zylindrische Außenfläche hat, mit der die Bohrung 5 bearbeitet wird.

Mit ausgezogenen Linien ist in Fig. 2 die Stellung der Schleifscheibe 7 beim Schleifen der dargestellten Zahnlücke mit der Profilschleifscheibe 3 illustriert. Wird zum Schleifen der nächsten Zahnlücke das Zahnrad 1 um die Drehachse 4 weitergetaktet, wird während des Weiterdrehens des Zahnrads 1 der nächste Umfangsabschnitt der Bohrung 5 geschuppt, bis der Bohrungsabschnitt in der benachbarten Relativposition 7' zu liegen kommt, angedeutet ist dies durch die gestrichelt eingetragene Lage der Schleifscheibe (die als solche natürlich ortsfest bleibt).

Beim Schruppen wird ein gewisses Zerspanvolumen von der Bohrungsoberfläche abgetragen, was mit der Bezugsziffer 12 angedeutet ist. Dabei wird vom gesamten Aufmaß a der Bohrung 5 der überwiegende Teil durch den Schruppvorgang abgenommen. Dieser Anteil liegt vorzugsweise bei mehr als 80 % des gesamten Aufmaßes a. Hierzu wird die zweite Schleifscheibe 7 entsprechend radial zugestellt.

Freilich ergibt sich durch die diskontinuierliche Drehung des Zahnrades 1 während des Schruppens eine nicht zufrieden stellende Oberfläche der Bohrung 5. Abhängig von der Zähnezahl der Verzahnung 2, dem Bohrungsdurchmesser und dem Durchmesser der zweiten Schleifscheibe 7 entsteht eine Restwelligkeit, die allerdings in der Regel sehr klein im Vergleich mit dem zu zerspanenden Aufmass a ist.

Das restliche verbleibende Aufmaß und damit auch die genannte Restwelligkeit wird im Anschluss an das Verzahnungsschleifen abgetragen, nämlich durch den "normalen" Fertigarbeitsgang (zumeist Schlichtarbeitsgang). Bei dessen Durchführung rotiert das Zahnrad 1 kontinuierlich um die Drehachse 4. Es ergibt sich folglich in kurzer Restzeit (Schlichtzeit) eine einwandfreie Bohrungsoberfläche.

Mit dem Vorschlag wird eine weitgehende Komplettbearbeitung des Zahnrads 1 auf der Schleifmaschine möglich, d. h. es wird neben dem Verzahnungsschleifen auch ein Rund- und/oder Planschleifen durchgeführt. Die Qualität der geschliffenen Bohrung bzw. Stirnfläche ist im Vergleich mit einer Bearbeitung auf einer separaten Schleifmaschine nicht schlechter, da sie durch den abschließenden Fertigarbeitsgang definiert wird; dieser findet im wesentlichen in derselben Weise wie auf klassischen Bohrung- bzw. Planschleifmaschinen statt.

Da die Hartfeinbearbeitung (Verzahnung und Bohrung/Stirnfläche) insgesamt in kürzerer Zeit durchgeführt werden kann (verglichen damit, dass die Verzahnung und die Bohrung/Stirnfläche in separaten Prozessen geschliffen werden), ergibt sich eine wirtschaftlichere Fertigung des Werkstücks 1.

### Bezugszeichenliste:

- 1: Werkstück (Zahnrad)
- 2: Verzahnung
- 3: Profilschleifscheibe
- 4: Drehachse
- 5: Oberfläche (Bohrungsfläche)
- 6: Oberfläche (Stirnfläche)
- 7: zweite Schleifscheibe
- 7': benachbarte Relativposition
- 8: erste Schleifspindel
- 9: zweite Schleifspindel
- 10: Abrichtwerkzeug
- 11: Schlitten
- 12: Zerspanvolumen

- A: Achsrichtung
- a: Aufmaß

## Patentansprüche

1. Verfahren zum Schleifen eines Werkstücks (1) mit einer geraden oder schrägen Außen- oder Innenverzahnung (2), wobei die Verzahnung (2) mit einer Profilschleifscheibe (3) im diskontinuierlichen Formschleifverfahren feinbearbeitet wird, bei dem die einzelnen Zahnlücken der Verzahnung (2) sequentiell durch Drehen des Werkstücks (1) um seine Drehachse (4) bearbeitet werden,
**dadurch gekennzeichnet,**
**dass** gleichzeitig mit dem Verzahnungsschleifvorgang eine weitere, von der Verzahnung (2) unterschiedliche Oberfläche (5, 6) des Werkstücks (1) mittels einer zweiten Schleifscheibe (7) einer Schruppschleifbearbeitung unterzogen wird, wobei im Anschluss an die Durchführung des Verzahnungsschleifvorgangs die weitere Oberfläche (5, 6) des Werkstücks (1) einer Fertigschleifbearbeitung unterzogen wird.

2. Verfahren nach Anspruch 1, **dadurch gekennzeichnet, dass** die weitere, von der Verzahnung (2) unterschiedliche Oberfläche (5, 6) des Werkstücks (1) eine zylindrische Innenfläche ist.

3. Verfahren nach Anspruch 1, **dadurch gekennzeichnet, dass** die weitere, von der Verzahnung (2) unterschiedliche Oberfläche (5, 6) des Werkstücks (1) eine zylindrische Außenfläche ist.

4. Verfahren nach Anspruch 1, **dadurch gekennzeichnet, dass** die weitere, von der Verzahnung (2) unterschiedliche Oberfläche (5, 6) des Werkstücks (1) eine kegelige Innenfläche ist.

5. Verfahren nach Anspruch 1, **dadurch gekennzeichnet, dass** die weitere, von der Verzahnung (2) unterschiedliche Oberfläche (5, 6) des Werkstücks (1) eine kegelige Außenfläche ist.

6. Verfahren nach Anspruch 1, **dadurch gekennzeichnet, dass** die weitere, von der Verzahnung (2) unterschiedliche Oberfläche (5, 6) des Werkstücks (1) eine ebene Fläche ist.

7. Verfahren nach Anspruch 6, **dadurch gekennzeichnet, dass** die ebene Fläche eine stirnseitige Planfläche des Werkstücks (1) ist.

8. Verfahren nach einem der Ansprüche 1 bis 7, **dadurch gekennzeichnet, dass** sowohl die Schruppschleifbearbeitung als auch die Fertigschleifbearbeitung mit der zweiten Schleifscheibe (7) durchgeführt wird.

9. Verfahren nach einem der Ansprüche 1 bis 7, **dadurch gekennzeichnet, dass** die Schruppschleifbearbeitung mit der zweiten Schleifscheibe (7) durchgeführt wird und dass die Fertigschleifbearbeitung mit einer dritten Schleifscheibe durchgeführt wird.

10. Verfahren nach einem der Ansprüche 1 bis 9, **dadurch gekennzeichnet, dass** durch die Schruppschleifbearbeitung mindestens 80 % des gesamten abzutragenden Aufmaßes (a) der von der Verzahnung (2) unterschiedliche Oberfläche (5, 6) des Werkstücks (1) abgetragen wird.

11. Verfahren nach einem der Ansprüche 1 bis 10, **dadurch gekennzeichnet, dass** bei der Durchführung der Fertigschleifbearbeitung das Werkstück
(1) kontinuierlich um seine Drehachse (4) rotiert.

12. Schleifmaschine zum Schleifen eines Werkstücks (1) mit einer geraden oder schrägen Außen- oder Innenverzahnung (2), wobei die Schleifmaschine eine erste Schleifspindel (8) zur Aufnahme einer Profilschleifscheibe (3) aufweist, zur Durchführung des Verfahrens nach einem der Ansprüche 1 bis 11,
**dadurch gekennzeichnet,**
**dass** die Schleifmaschine weiterhin eine zweite Schleifspindel (9) zur Aufnahme einer Innen- oder Außenrund-Scheifscheibe (7) oder einer Planschleifscheibe aufweist.
